# EUROPÄISCHE PATENTSCHRIFT

(11) **EP 3 008 537 B1**
(45) Veröffentlichungstag und Bekanntmachung des Hinweises auf die Patenterteilung: **04.08.2021**
(21) Anmeldenummer: 14741195.3
(22) Anmeldetag: 11.06.2014
(51) Int. Cl.: G05D 16/00, G05D 16/06, F16K 5/06, F24D 19/10, G05D 7/01

(54) **DRUCKAUSGLEICHSEINSATZ**
PRESSURE EQUALISING INSERT
INSERT DE COMPENSATION DE PRESSION

(30) Priorität: 12.06.2013 CH 11042013
(43) Veröffentlichungstag der Anmeldung: 20.04.2016
(73) Patentinhaber: Belimo Holding AG, 8340 Hinwil (CH)
(72) Erfinder: JUKES, Andrew, James, CH-8623 Wetzikon (CH); KELLER, Urs, CH-8340 Hinwil (CH)
(74) Vertreter: Rentsch Partner AG
(86) Internationale Anmeldenummer: PCT/EP2014/001584
(87) Internationale Veröffentlichungsnummer: WO 2014/198412

(56) Entgegenhaltungen:
- WO-A2-01/13017
- WO-A2-2011/154003
- GB-A- 316 344
- GB-A- 1 063 241
- US-A- 2 642 091
- US-A- 3 890 999
- US-A- 5 234 025
- US-A- 5 875 815
- US-A1- 2003 192 597
- US-A1- 2007 284 004
- Anonymous: "Pressure regulator - Wikipedia", , 29 May 2013 (2013-05-29), XP055745792, Retrieved from the Internet: URL:https://en.wikipedia.org/w/index.php?t itle=Pressure_regulator&oldid=557365282 [retrieved on 2020-11-02]
- Anonymous: "Piston vs Diaphram Control Valve | Automation & Control Engineering Forum", , 4 June 2008 (2008-06-04), XP055745842, Retrieved from the Internet: URL:https://control.com/forums/threads/pis ton-vs-diaphram-control-valve.29708/ [retrieved on 2020-11-02]

## Beschreibung

### TECHNISCHES GEBIET

Die Erfindung bezieht sich auf einen Druckausgleichseinsatz, welcher für den Einbau in ein Ventil zum Regeln eines Fluidstroms insbesondere einer HVAC-Anlage vorgesehen ist.

### STAND DER TECHNIK

Aus dem Stand der Technik sind Ventile für HVAC-Anlagen bekannt (HVAC: Heating, Ventilation, and Air Conditioning), welche eine erste Ventileinrichtung aufweisen zum Regeln eines Fluidstroms, wobei mit einer zweiten Ventileinrichtung für eine konstante Druckdifferenz über der ersten Ventileinrichtung gesorgt wird. Derartige Ventile sind insbesondere in Zentralheizungsanlagen von Vorteil und verhindern, dass der Verbrauch an Fluidstrom durch andere Heizkörper den Druck über das Ventil eines Heizkörpers negativ beeinflusst.

Die WO 2004/107075 zeigt eine Ventil für eine HVAC-Anlage, bei welchem die erste Ventileinrichtung in einem ersten Teil des Gehäuses und die zweite Ventileinrichtung in einem zweiten Teil des Gehäuses angeordnet sind, wobei der erste Teil und der zweite Teil des Gehäuses miteinander verbunden sind. Ein solches Ventil ist relativ kompakt und benötigt nur einen relativ kleinen Bauraum.

Die DE 198 24 630 zeigt die Kombination eines axialen Membranreglers für den Volumenstrom oder die Differenzdruckregelung von Flüssigkeiten und Gasen. In einem geschlossenen Gehäuse sind in Strömungsrichtung hintereinander eine Drossel, ein Regelventil und ein Volumenstromregler angebracht. Der Ventilsitz der Drossel und der Ventilsitz des Regelventils sind an entgegengesetzten Seiten desselben Strömungsdurchgangs angeordnet. Die Drossel ist vor Verdrehung mit einer Mutter gesichert. Eine innere Ventilbohrung des Gehäuses des Ventils verbindet die Eintrittsöffnung und die Membrankammer vor der Membrane des Regelventils. Der Druck aus der Mittelöffnung wirkt durch die Impulsbohrung auf die Membrane. Die Membrane ist am Gehäuse des Ventils gegen die Kraft einer Feder gehalten und umfasst den beweglichen Ventilteller. Das Medium fliesst durch Ventilsitz und Ventilteller im Volumenstromregler.

Die US3890999 A zeigt einen Druckregler für Fluide, umfassend ein rohrförmiges, lineares Ventilelement, welches gegen einen Ventilsitz aufliegt, um ein Ausgleichen bereitzustellen, mit einem Kolben, welcher auf einen ausgangsseitigen Druck reagiert, wobei die lineare Konstruktion den Druckabfall minimiert. Der Körper des Reglers umfasst zwei relativ zueinander rotierbare Teile mit linearen Einlass und Auslassverbindungen, welche eine Kopplung an den Regler vereinfachen. Der Kolben, welcher Teil des Ventilelements ist, wirkt gegen eine einstellbare Vorspannfeder.

Die US2007/0284004 A1 beschreibt einen Druckregler umfassend ein Regelkörper mit einem Gehäuse, ein Einlassteil an einem Ende des Gehäuses und eine Abdeckung an einem entgegengesetzten Ende des Gehäuses, ein Druckreglermodul aufgenommen im Gehäuse und angeordnet zwischen dem Einlassteil und der Abdeckung, mit einer zentralen Achse des Druckreglermoduls, welche in einem Winkel zur Achse des Regelkörpers geneigt ist. Das Druckreglermodul beinhaltet einen Kolben, welcher zu und von einem Ventilsitz weg, welcher axial zum Kolben ausgerichtet ist, beweglich ist.

Die US2003/192597 A1 beschreibt ein Steuerventil zum Regeln eines Fluids, mit einem Gehäuse, das einen stromaufwärtigen Bereich und einen stromabwärtigen Bereich und eine Steueröffnung aufweist, die dem stromabwärtigen Bereich benachbart ausgebildet ist; einem Kolben, der in dem Gehäuse gleitend angeordnet ist, wobei der Kolben einen Fluiddurchgang aufweist, durch den der gesteuerte Fluss hindurchgeht, der einen Zwischenbereich definiert, der zwischen dem stromaufwärtigen Bereich und dem stromabwärtigen Bereich angeordnet ist; einem Flanschabschnitt mit einer Oberseite und einer Unterseite und einem Schaftabschnitt mit einem Rand, der dem stromaufwärtigen Bereich benachbart ist. Das Steuerventil umfasst weiter ein elastisches Element, das in dem Gehäuse angeordnet ist, um der Translation des Kolbens in dem Gehäuse entgegenzuwirken; ein Drosselelement, das dem stromaufwärtigen Bereich benachbart ist, wobei das Drosselelement eine Drosselfläche aufweist, die dem Rand des Kolbens benachbart ist, wobei die Drosselfläche und der Rand eine Drosselöffnung zwischen sich definieren; und eine Ausgleichsöffnung, die in dem Gehäuse ausgebildet ist, um es einem Fluid zu ermöglichen, in dem stromabwärtigen Bereich in eine Ausgleichskammer einzutreten, die durch einen Bereich zwischen einer Innenfläche des Gehäuses und einer Aussenfläche des Kolbens definiert ist, derart, dass das Druckgefälle über den Flanschabschnitt gleich dem Druckgefälle über die Steueröffnung ist.

Die US5234025 A beschreibt ein Regelventil zum Regeln eines im Wesentlichen konstanten Flusses, umfassend einen Kolben, welcher eine Bohrung in zwei Kammern unterteilt. Der Kolben ist durch eine Feder gegen eine obere Kammer der Bohrung vorgespannt. Fluid vom Einlass tritt in die obere Kammer durch einen Referenzdruckdurchgang ein und übt eine abwärts orientierte Kraft auf den Kolben aus. Fluid vom Einlass tritt ferner durch eine Einlassflussdrossel und in eine untere Kammer der Bohrung, wo es eine aufwärts orientierte Kraft auf den Kolben in Übereinstimmung mit der Federkraft ausübt. Der Kolben umfasst ein Ende, welches variabel mit einer Öffnung in der unteren Kammer zusammenwirkt, um eine konstante Druckdifferenz zwischen der oberen Kammer und der unteren Kammer zu erhalten.

Ventile mit mehreren Ventileinrichtungen sind vom Aufbau her relativ kompliziert. Dementsprechend ist die Herstellung solcher Ventile relativ aufwendig.

### DARSTELLUNG DER ERFINDUNG

Es ist eine Aufgabe der vorliegenden Erfindung einen Druckausgleichseinsatz zu schaffen, welcher für den Einbau in ein Ventil zum Regeln eines Fluidstroms insbesondere einer HVAC-Anlage vorgesehen ist und zumindest gewisse Nachteile des Standes der Technik vermeidet oder reduziert. Es ist insbesondere eine Aufgabe der vorliegenden Erfindung einen Druckausgleichseinsatz zu schaffen, welcher für den Einbau in ein Ventil zum Regeln eines Fluidstroms insbesondere einer HVAC-Anlage vorgesehen ist und die Herstellung des Ventils vereinfacht.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Ein Druckausgleichseinsatz, welcher für den Einbau in ein Ventil zum Regeln eines Fluidstroms insbesondere einer HVAC-Anlage vorgesehen ist, umfasst ein Gehäuse mit einem daran verschiebbar angebrachtem Stellkörper, welcher eingerichtet ist, den durch das Ventil geregelten Fluidstrom zumindest teilweise zu führen und bei eingebautem Druckausgleichseinsatz abhängig von einer im Fluidstrom herrschenden Druckdifferenz zur Regelung des Fluidstroms mit einem Ventilsitz zusammenzuwirken. Der Druckausgleichseinsatz umfasst ein Gehäuse und kann im Ventil leicht und rasch angeordnet werden. Der Ventilsitz kann am Druckausgleichseinsatz oder am Ventil angeordnet sein. Der Druckausgleichseinsatz umfasst die für den Druckausgleich erforderlichen Funktionalitäten und kann vollständig in einer dafür besonders geeigneten Fabrikationsumgebung vorfabriziert werden. Die Fabrikationsumgebung zeichnet sich beispielsweise durch spezialisierte Werkzeuge, Reinheit, etc. aus und ermöglicht dadurch eine effiziente Herstellung des Druckausgleichseinsatz.

In einer Ausführungsform ist der Stellkörper zwischen einer Eingangsöffnung und einer Ausgangsöffnung des Gehäuses derart angeordnet, dass sich der Stellkörper entsprechend einer Druckdifferenz zwischen dem Druck eines im Druckausgleichseinsatz geführten Fluidstroms und dem Druck eines ausserhalb des Druckausgleichseinsatz geführten Fluidstroms für das Zusammenwirken mit dem Ventilsitz relativ zum Ventilsitz verschiebt. Ein solcher Druckausgleichseinsatz stellt sowohl Funktionalitäten zum Führen des Fluidstroms als auch Funktionalitäten für den Druckausgleich zur Verfügung und ist deshalb für den Einbau in ein Ventil besonders geeignet.

In einer Ausführungsform ist der Stellkörper von einer Membran verschiebbar gehalten, wobei die Membran einen Hohlraum des Gehäuses in einen innenseitigen Fluidbereich und einen aussenseitig zugeordneten Fluidbereich unterteilt, wobei der innenseitige Fluidbereich mit dem vom Stellkörper geführten Fluidstrom fluidverbunden ist, wobei der aussenseitig zugeordnete Fluidbereich mit einem Aussenbereich des Gehäuses fluidverbunden ist, wobei der Stellkörper von einem Federelement vorgespannt ist und sich die aktuelle Verschiebung des Stellkörpers aus einer Druckdifferenz zwischen einem Druck im innenseitigen Fluidbereich und einem Druck im aussenseitig zugeordneten Fluidbereich ergibt. Ein solcher Druckausgleichseinsatz stellt in robuster und langlebiger Ausführung die Funktionalitäten zur Verfügung, dass dieser eingebaut in einem Ventil den Druckausgleich zur Verfügung stellt.

In einer Ausführungsform sind das Gehäuse und der Stellkörper im Wesentlichen zylinderförmig ausgeführt. Der Druckausgleichseinsatz ist für den Einbau in die üblicherweise im Wesentlichen zylinderförmig aufgebauten Ventile besonderes geeignet.

In einer Ausführungsform weist das Gehäuse mehrere Gehäuseteile auf, welche mit einer oder mehreren Verbindungseinrichtungen miteinander verbindbar sind. Die Bestandteile des Druckausgleichseinsatzes sind dadurch einfach zugänglich und der Druckausgleichseinsatz lässt sich dadurch einfach herstellen. Die Verbindungseinrichtungen können Schraubverbindungen, Presssitze, Simmerringe, etc. umfassen.

In einer Ausführungsform sind eine oder mehrere Begrenzungseinrichtungen angeordnet, welche die Verschiebung des Stellkörpers relativ zum Ventilsitz begrenzt. Die Verschiebung des Stellkörpers kann in Richtung des Ventilsitz und/oder in die Gegenrichtung begrenzt werden. Die Begrenzungseinrichtungen können in einem Durchgang des Druckausgleichseinsatz, in welchem der Stellkörper geführt ist, angeordnet sein. Die Begrenzungseinrichtung kann ausgebildet sein, den Stellkörper im Druckausgleichseinsatz zu halten, so dass keine zusätzlichen Haltemittel für den Stellkörper erforderlich sind. Dadurch vereinfacht sich der Einbau des Druckausgleichseinsatz in ein Ventil. Die Begrenzungseinrichtung kann ausgebildet sein die Verschiebung des Stellkörpers in Richtung des Ventilsitz zu begrenzen und somit zu verhindern, dass der Stellkörper den Ventilsitz beschädigt. Dadurch wird die Lebensdauer des Ventils verbessert.

In einer Ausführungsform ist eingangseitig zwischen dem Gehäuse und dem Stellkörper ein Dichtelement angebracht. Das Dichtelement verhindert, dass der Fluidstrom zwischen das Gehäuse und den Stellkörper eindringen kann.

In einer Ausführungsform weist eine Membran zur Halterung des Stellkörpers eine oder mehrere wellenförmige Prägungen auf. Die Verschiebbarkeit des Stellkörpers wird dadurch erleichtert, insbesondere sind auch grössere Verschiebungen ermöglicht.

In einer Ausführungsform weist das Gehäuse einen ersten Abschnitt auf, welcher bei eingebautem Druckausgleichseinsatz für die Abdichtung zu einem Gehäuse des Ventils eingerichtet ist, und das Gehäuse weist einen dritten Abschnitt auf, welcher eingerichtet ist, bei eingebautem Druckausgleichseinsatz eine Fluidverbindung in der Form eines Spalts zwischen dem Gehäuse und dem Gehäuse des Ventils herzustellen, wobei der Spalt eine Fluidverbindung zum aussenseitig zugeordneten Fluidbereich zur Verfügung stellt. Der Durchmesser des ersten Abschnitt ist beispielsweise grösser als der Durchmesser des dritten Abschnitt, wodurch der Druckausgleichseinsatz geeignet ist für den Einbau in ein Ventil mit einem zylinderförmigen Aufnahmebereich für den Druckausgleicheinsatz. Der Spalt zwischen dem Gehäuse des Druckausgleichseinsatz und dem Gehäuse des Ventils ist insbesondere genügend schmal ausgebildet, wobei durch den schmalen Spalt zwischen dem Druckausgleichseinsatz und dem Ventilgehäuse eine Dämpfung der Membran respektive des Stellkörpers erreicht wird. Insbesondere bei genügender Länge des schmalen Spalts wird auch die Verschmutzungsempfindlichkeit reduziert. In einer Variante ist zwischen dem ersten Abschnitt und dem dritten Abschnitt ein zweiter Abschnitt eingerichtet, zwischen dem ausgangsseitig zugeordnetem Fluidbereich und der Aussenseite des Gehäuses des Druckausgleichseinsatzes eine Fluidverbindung herzustellen, welche in die in der Form eines Spalts ausgebildete Fluidverbindung zwischen dem Gehäuse des Ventils und dem Gehäuse des Druckausgleichseinsatz mündet. Durch eine entsprechende Dimensionierung der Fluidverbindung kann alternativ oder zusätzlich eine Dämpfung der Membran respektive des Stellkörpers erreicht werden. In einer Variante ist der Durchmesser des dritten Abschnitts grösser als der Durchmesser des zweiten Abschnitts, welcher wiederum kleiner als der Durchmesser des dritten Abschnitt sein kann. Dadurch ist der Druckausgleichseinsatz besonders geeignet für den Einbau in ein Ventil mit einem zylinderförmigen Aufnahmebereich für den Druckausgleichseinsatz.

In einer Ausführungsvariante ist der ausgangseitig zugeordnete Fluidbereich über eine oder mehrere Öffnungen in der Wand des Gehäuses mit der Aussenseite des Gehäuses fluidverbunden ist. Die Öffnungen können als radiale Bohrungen in einem zylinderförmigen Segment des Gehäuses ausgebildet sein. Für kleine Öffnungen ergibt sich eine Dämpfung der Bewegung des Stellkörpers respektive der Membran des Druckausgleichseinsatzes. Durch diese Ausgestaltung des Ventilgehäuses wird das Zuführen des ausgangsseitigen Drucks in den Druckausgleichseinsatz einfach ausgestaltet.

In einer Ausführungsvariante weist eingangsseitig an einem ersten Abschnitt des Gehäuses eine umlaufende Nut zur Aufnahme eines Dichtelements auf, welches bei eingebautem Druckausgleichseinsatz für die Abdichtung zu einem Gehäuse des Ventils eingerichtet ist. Bei eingebautem Druckausgleichseinsatz wirkt das Dichtelement mit einem Gehäuseteil des Ventils zusammen und bewirkt damit, dass der eingangsseitig einströmende Fluidstrom den Druckausgleichseinsatz nicht umfliessen kann und somit der Fluidstrom vollständig im Stellkörper geführt ist.

In einer Ausführungsvariante ist eingangsseitig an einem dritten Abschnitt des Gehäuses eine ringförmige Nut zur Aufnahme eines Dichteinsatzes für ein Ventilelement des Ventils angebracht. Der Dichteinsatz wird in der ringförmigen Nut gehalten und zugleich gegenüber dem Ventilelement richtig positioniert.

In einer Ausführungsvariante weist der Stellkörper einen lippenförmigen Bereich auf. Der lippenförmige Bereich ist insbesondere eingangsseitig des Stellkörpers ausgebildet. Der lippenförmige Bereich weist eine flanschförmige Gestalt auf. Der lippenförmige Bereich führt dazu, dass die auf den Stellkörper wirkenden Kräfte unabhängig von eingangsseitigen Druck sind und damit der Durchfluss durch ein Ventil, in welches ein solcher Druckausgleichseinsatz eingebaut ist, unabhängig vom eingangsseitigen Druck ist.

Neben einem Druckausgleichseinsatz bezieht sich die Erfindung auf ein Ventil zum Regeln eines Fluidstroms insbesondere einer HVAC-Anlage mit einem eingebauten Druckausgleichseinsatz, welcher Druckausgleichseinsatz insbesondere als vormontierte Baugruppe in das Ventil einsetzbar ist. Ein solches Ventil ist rasch und kostengünstig herstellbar.

In einer Ausführungsvariante ist zwischen dem Gehäuse des Druckausgleichseinsatz und einem Gehäuse des Ventils ein Spalt ausgebildet, welcher Spalt für das Erstellen einer Fluidverbindung zum aussenseitig zugeordneten Fluidbereich des Druckausgleichseinsatzes vorgesehen ist und derart ausgeführt ist, dass das Eindringen von Schmutz in den Druckausgleichsatz reduziert wird und/oder dass eine hydraulische Dämpfung der Bewegung des Stellkörpers des Druckausgleichseinsatz bewirkt wird. Ein solches Ventil weist durch die Dämpfung des Stellkörpers sowie durch die Verringerung der Verschmutzungsgefahr besonders günstige und langlebige Eigenschaften auf.

In einer Ausführungsvariante ist ein erstes Ventilgehäuseteil eingerichtet, ein Ventilelement und den Druckausgleichseinsatz aufzunehmen, wobei ein zweites Ventilgehäuseteil zum Fixieren des Druckausgleichseinsatzes im ersten Ventilgehäuseteil eingerichtet ist, wobei das erste und das zweite Ventilgehäuseteil eingerichtet sind, dass eine Wirkverbindung zwischen dem ersten und dem zweiten Ventilgehäuseteil erstellbar ist. Die Wirkverbindung ist beispielsweise als Schraubverbindung, Presssitz, etc. erstellbar. Ein solches Ventil ist rasch und kostengünstig herstellbar.

Gemäss einem weiteren Aspekt der Erfindung ist ein Druckausgleichseinsatz für den Einbau in ein Ventil zum Regeln eines Fluidstroms insbesondere einer HVAC-Anlage vorgesehen. Der Druckausgleichseinsatz umfasst ein Gehäuse mit einem daran verschiebbar angebrachten Stellkörper, welcher eingerichtet ist, den durch das Ventil geregelten Fluidstrom zumindest teilweise zu führen. Der Stellkörper weist einen lippenförmigen Bereich auf, dessen Dimensionierung eine Druckunabhängigkeit der Durchflussmenge des im Stellkörper geführten Fluidstroms von einem eingangsseitigen Druck bewirkt. Dadurch wird der Betrieb eines Ventils, in welches der Druckausgleichseinsatz eingebaut ist, verbessert. Die Dimensionierung erfolgt insbesondere experimentell. In einer Variante liegt die wirksame Grösse des lippenförmigen Bereichs im Wesentlichen in der Grössenordnung einer Wandstärke des Stellkörpers.

In einer Ausführungsvariante ist der Stellkörper eingerichtet, bei eingebautem Druckausgleichseinsatz abhängig von einer im Fluidstrom herrschenden Druckdifferenz zur Regelung des Fluidstroms mit einem Ventilsitz zusammenzuwirken.

In einer Ausführungsvariante ist der Stellkörper zwischen einer Eingangsöffnung und einer Ausgangsöffnung des Gehäuses derart angeordnet, dass sich der Stellkörper entsprechend einer Druckdifferenz zwischen dem Druck eines im Druckausgleichseinsatz geführten Fluidstroms und dem Druck eines ausserhalb des Druckausgleichseinsatz geführten Fluidstroms für das Zusammenwirken mit dem Ventilsitz relativ zum Ventilsitz verschiebt.

In einer Ausführungsvariante ist der Stellkörper von einer Membran verschiebbar gehalten, wobei die Membran einen Hohlraum des Gehäuses in einen innenseitigen Fluidbereich und einen aussenseitig zugeordneten Fluidbereich unterteilt, wobei der innenseitige Fluidbereich mit dem vom Stellkörper geführten Fluidstrom fluidverbunden ist, wobei der aussenseitig zugeordnete Fluidbereich mit einem Aussenbereich des Gehäuses fluidverbunden ist, wobei der Stellkörper von einem Federelement vorgespannt ist und sich die aktuelle Verschiebung des Stellkörpers aus einer Druckdifferenz zwischen einem Druck im innenseitigen Fluidbereich und einem Druck im aussenseitig zugeordneten Fluidbereich ergibt.

In einer Ausführungsvariante sind das Gehäuse und der Stellkörper im Wesentlichen zylinderförmig ausgeführt.

In einer Ausführungsvariante weist das Gehäuse mehrere Gehäuseteile auf, welche mit einer oder mehreren Verbindungseinrichtungen miteinander verbindbar sind.

In einer Ausführungsvariante sind eine oder mehrere Begrenzungseinrichtungen angeordnet, welche die Verschiebung des Stellkörpers relativ zum Ventilsitz begrenzen.

In einer Ausführungsvariante ist eingangseitig zwischen dem Gehäuse und dem Stellkörper ein Dichtelement angebracht.

In einer Ausführungsvariante weist eine Membran zur Halterung des Stellkörpers eine oder mehrere wellenförmige Prägungen auf.

In einer Ausführungsvariante weist das Gehäuse einen ersten Abschnitt auf, welcher bei eingebautem Druckausgleichseinsatz für die Abdichtung zu einem Gehäuse des Ventils eingerichtet ist. Das Gehäuse weist ferner einen dritten Abschnitt auf, welcher eingerichtet ist, bei eingebautem Druckausgleichseinsatz eine Fluidverbindung in der Form eines Spalts zwischen dem Gehäuse und dem Gehäuse des Ventils herzustellen. Der Spalt stellt eine Fluidverbindung zum aussenseitig zugeordneten Fluidbereich zur Verfügung.

In einer Ausführungsvariante ist der aussenseitig zugeordnete Fluidbereich über eine oder mehrere Öffnungen in einer Wand des Gehäuses mit der Aussenseite des Gehäuses fluidverbunden.

In einer Ausführungsvariante weist eingangsseitig ein erster Abschnitt des Gehäuses eine umlaufende Nut zur Aufnahme eines Dichtelements auf, welches bei eingebautem Druckausgleichseinsatz für die Abdichtung zu einem Gehäuse des Ventils eingerichtet ist.

In einer Ausführungsvariante weist ausgangsseitig ein dritter Abschnitt des Gehäuses eine ringförmige Nut zur Aufnahme eines Dichteinsatzes für ein Ventilelement des Ventils auf.

Neben dem Druckausgleichseinsatz bezieht sich der weitere Aspekt der Erfindung auf ein Ventil zum Regeln eines Fluidstroms insbesondere einer HVAC-Anlage mit einem eingebauten Druckausgleichseinsatz gemäss dem weiteren Aspekt der Erfindung, welcher Druckausgleichseinsatz insbesondere als vormontierte Baugruppe in das Ventil einsetzbar ist.

In einer Ausführungsvariante ist zwischen dem Gehäuse des Druckausgleichseinsatz und einem Gehäuse des Ventils ein Spalt ausgebildet, welcher Spalt für das Erstellen einer Fluidverbindung zum aussenseitig zugeordneten Fluidbereich des Druckausgleichseinsatzes vorgesehen ist und derart ausgeführt ist, dass das Eindringen von Schmutz in den Druckausgleichsatz reduziert wird und/oder dass eine hydraulische Dämpfung der Bewegung des Stellkörpers des Druckausgleichseinsatz bewirkt wird.

In einer Ausführungsvariante ist ein erstes Ventilgehäuseteil eingerichtet, ein Ventilelement und den Druckausgleichseinsatz aufzunehmen, wobei ein zweites Ventilgehäuseteil zum Fixieren des Druckausgleichseinsatzes im ersten Ventilgehäuseteil eingerichtet ist, wobei das erste und das zweite Ventilgehäuseteil eingerichtet sind, dass eine Wirkverbindung zwischen dem ersten und dem zweiten Ventilgehäuseteil erstellbar ist.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1a: schematisch einen Querschnitt durch eine erste Ausführungsform eines Druckausgleichseinsatz;
- Fig. 1b: schematisch einen Querschnitt durch eine erste Ausführungsform eines Druckausgleichseinsatz, wobei der Stellkörper relativ zum Ventilsitz verschoben ist;
- Fig. 2: schematisch eine erste Ausführungsform eines Ventils mit einer eingebauten ersten Ausführungsform eines Druckausgleichseinsatz;
- Fig. 3: schematisch einen Querschnitt durch eine zweite Ausführungsform eines Druckausgleichseinsatz;
- Fig. 4: schematisch eine zweite Ausführungsform eines Ventils mit einer eingebauten zweiten Ausführungsform eines Druckausgleichseinsatz;
- Fig. 5a: schematisch einen Querschnitt durch eine dritte Ausführungsform eines Druckausgleichseinsatz;
- Fig. 5b: schematisch einen Querschnitt durch eine dritte Ausführungsform eines Druckausgleichseinsatz, wobei der Stellkörper relativ zum Ventilsitz verschoben ist;
- Fig. 6: schematisch eine dritte Ausführungsform eines Ventils mit einer dritten Ausführungsform des erfindungsgemässen Druckausgleichseinsatz
- Fig. 7: schematisch auf den Stellkörper wirkende Kräfte des Druckausgleicheinsatzes gemäss Fig. 5a und Fig. 5b;
- Fig. 8: schematisch eine vierte Ausführungsform eines Druckausgleicheinsatzes mit einem lippenförmigen Bereich; und
- Fig. 8a: schematisch eine Detailansicht des lippenförmigen Bereichs des Druckausgleicheinsatzes aus Fig. 8 mit darauf wirkenden Kräften.

### WEG(E) ZUR AUSFÜHRUNG DER ERFINDUNG

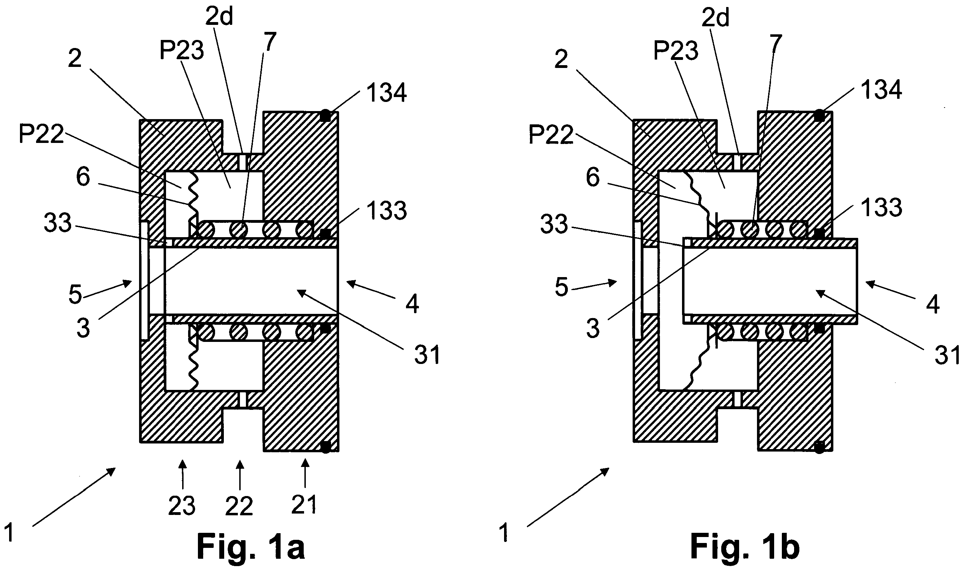

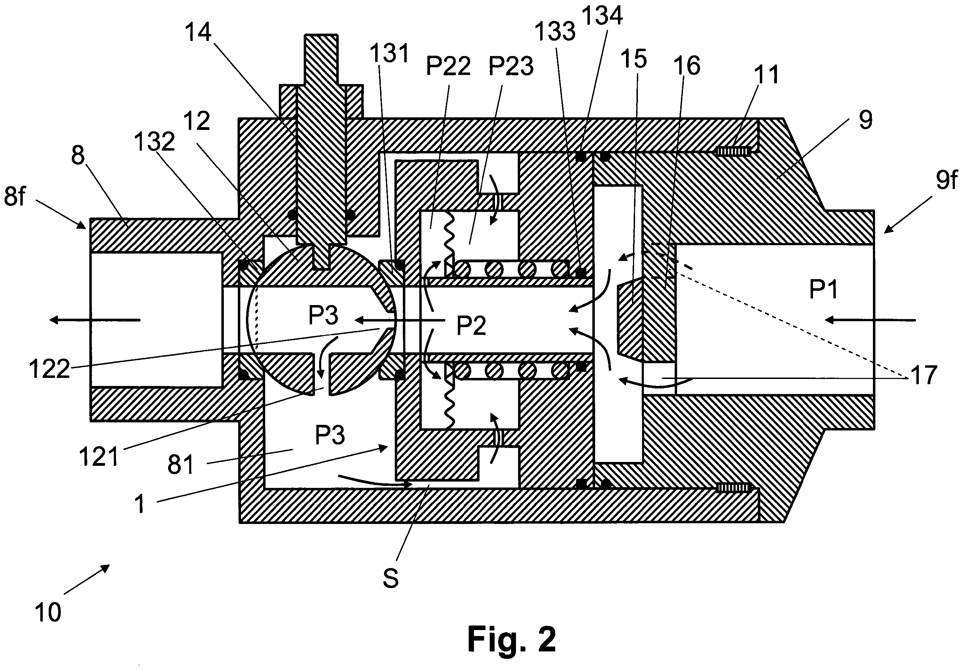

Figur 1a zeigt schematisch einen Querschnitt durch eine erste Ausführungsform eines erfindungsgemässen Druckausgleichseinsatz 1. Der Druckausgleichseinsatz 1 ist vorgesehen für den Einbau in ein in Figur 2 schematisch dargestellte erste Ausführungsform eines Ventils 10 zum Regeln eines Fluidstroms einer HVAC- Anlage. Der Fluidstrom ist insbesondere ein Flüssigkeitsstrom, also z.B. ein Warmwasser- oder Kaltwasserstrom der HVAC-Anlage. Der Druckausgleichseinsatz 1 weist ein Gehäuse 2 auf, in welchem die wesentlichen Bestandteile des Druckausgleichseinsatzes 1 untergebracht sind. Das Gehäuse 2 ist beispielsweise aus einem Metall hergestellt, beispielsweise aus rostbeständigem Stahl, Messing, etc.

Wie aus Figur 1a ersichtlich, ist das Gehäuse 2 axialsymmetrisch als zylinderförmiger Körper ausgeführt. Das Gehäuse 2 ist in Figur 1a schematisch einstückig dargestellt. Um jedoch die wesentlichen Bestandteile des Druckausgleichseinsatzes 1 im Gehäuse 2 unterbringen zu können, ist das Gehäuse 2 aus mehreren Teilen aufgebaut, wobei die mehreren Teile durch Verbindungsmittel wie Gewinde, Federringe, Presssitze, etc. zusammengehalten sind. Die mehreren Teile des Gehäuses 2 umfassen beispielsweise einen zylinderförmigen Gehäusekörper sowie einen scheibenförmigen Gehäusedeckel.

In einem Durchgang des Gehäuses 2, welcher sich zwischen einer Eingangsöffnung 4 zu einer Ausgangsöffnung 5 des Gehäuses 2 befindet, ist ein verschiebbarer Stellkörper 3 angeordnet. Der Durchgang und der Stellkörper 3 sind axialsymmetrisch ausgeführt. Der Stellkörper 3 ist als Hohlzylinder oder Hülse ausgebildet und besteht beispielsweise aus einem der oben im Zusammenhang mit der Beschreibung des Gehäuses 2 aufgeführten Materialien.

Der Stellkörper 3 ist eingerichtet zum Führen 31 eines Fluidstroms und zum Zusammenwirken - abhängig von einer aktuellen Verschiebung des Stellkörpers 3 - mit einem Ventilsitz 15. Der Ventilsitz 15 ist beispielsweise am Ventil 10 angebracht, für welches der Druckausgleichseinsatz 1 zum Einbau vorgesehen ist (vgl. Figur 2). In einer Variante ist der Ventilsitz 15 am Druckausgleichseinsatz 1 angebracht. Zum Führen 31 des Fluidstroms weist der Stellkörper 3 einen genügend grossen offenen Querschnitt auf.

Wie aus Figur 1a ersichtlich, ist der Stellkörper 3 durch eine Membran 6 verschiebbar gehalten, wobei die Membran 6 einen Hohlraum des Gehäuses 2 in einen innenseitigen Fluidbereich P22 und einen aussenseitig zugeordneten Fluidbereich P23 unterteilt. Wie aus Figur 1a ersichtlich, ist die Membran 6 scheibenförmig ausgeführt, wobei am Innenumfang der Membran 6 der Stellkörper 3 befestigt ist und der Aussenumfang der Membran 6 innerhalb des Hohlraums am Gehäuse 2 befestigt ist. Die Membran 6 weist eine oder mehrere wellenförmige Prägungen auf, d.h. der Querschnitt der Membran 6 ist wellenförmig. Dadurch wird die Beweglichkeit der Membran 6 erhöht und somit das Verschieben des Stellkörpers 3 begünstigt. Die Membran 6 ist aus irgendeinem flexiblen Material hergestellt.

Der innenseitige Fluidbereich P22 des Hohlraums des Gehäuses 2 ist über Stellkörperdurchgänge 33 mit dem im Stellkörper 3 geführten Fluidstrom fluidverbunden. Somit herrscht im innenseitigen Fluidbereich P22 des Hohlraums des Gehäuses 2 derselbe Druck wie im durch den Stellkörpers 3 geführten Fluidstrom.

Die Stellkörperdurchgänge 33 können als am Umfang des Stellkörpers 3 angebrachte Nuten oder Schlitze ausgeführt sein. In einer alternativen Ausführungsvariante werden die Stellkörperdurchgänge 33 nur durch die Fläche zwischen dem Umfang des Stellkörpers 3 und dem Gehäuse 2 gebildet, welche keine Dichtmittel aufweist und somit für ein Fluid durchlässig ist. Die Fluidverbindung zwischen dem Fluidstrom im Stellkörper 3 und dem innenseitigen Fluidbereich P22 kann in irgend einer anderen Weise gebildet werden.

Der aussenseitig zugeordnete Fluidbereich P23 des Hohlraums des Gehäuses 2 ist über Gehäusedurchgänge 2d mit einem Aussenbereich des Gehäuses 2 fluidverbunden. Somit herrscht im aussenseitig zugeordneten Fluidbereich P23 des Hohlraums des Gehäuses 2 derselbe Druck wie auf der Aussenseite des Gehäuses 2.

Die Gehäusedurchgänge 2d können als in regelmässigen Abständen an einem Umfang des Gehäuses 2 angebrachte Bohrungen ausgeführt sein. Die Fluidverbindung zwischen dem Aussenbereich des Gehäuses 2 und dem aussenseitig zugeordneten Fluidbereich P23 kann in irgendeiner anderen Weise gebildet werden.

Wie in Figur 1a schematisch dargestellt, ist am Umfang des Stellkörpers 3 zwischen der Membran 6 und dem Gehäuse 2 eine Feder 7 angeordnet. Durch die Federkraft wird der Stellkörper 3 in Richtung der Ausgangsöffnung 5 des Gehäuses 2 gedrückt.

Ausgangseitig stimmt der Innendurchmesser der Ausgangsöffnung 5 mit dem Innendurchmesser des Stellkörpers 3 überein und der Aussendurchmesser des Stellkörpers 3 ist grösser als der Innendurchmesser der Ausgangsöffnung 5, so dass eine Begrenzungseinrichtung gebildet wird, welcher verhindert, dass der Stellkörper 3 durch die Federkraft in Richtung der Ausgangsöffnung 5 weiter als bis in die in Figur 1a gezeigte Position verschoben wird.

Eingangseitig ist der Aussendurchmesser der Eingangsöffnung 4 grösser als der Aussendurchmesser des Stellkörpers 3, so dass der Stellkörper 3 wie in Figur 1b schematisch dargestellt - entgegen der Federkraft - aus dem Gehäuse 2 herausverschoben werden kann.

Das Mass der Verschiebung aus dem Gehäuse 2 heraus ergibt sich aus der Federkraft der Feder 7 und der Druckdifferenz zwischen dem Druck im innenseitigen Fluidbereich P22 des Hohlraums des Gehäuses 2 sowie dem Druck im aussenseitig zugeordneten Fluidbereich P23 des Hohlraums des Gehäuses 2. Diese Druckdifferenz ergibt sich im Betrieb bei im Ventil 10 eingebauten Druckausgleichseinsatz 1. Die Membran 6 trennt den innenseitigen Fluidbereich P22 vom aussenseitig zugeordneten Fluidbereich P23 und verschiebt sich entsprechend der Druckdifferenz zwischen dem innenseitigen Fluidbereich P22 und dem aussenseitig zugeordneten Fluidbereich P23. Da die Membran 6 am Stellkörper 3 befestigt ist, wird die Verschiebung der Membran 6 an den Stellkörper 3 übertragen, welcher sich somit entsprechend verschiebt.

Der Druckausgleichseinsatz 1, welcher für den Einbau in ein Ventil einer HVAC-Anlage vorgesehen ist, kann losgelöst vom Ventil der HVAC-Anlage vollständig vorfabriziert werden. Die Fabrikation kann in einer spezialisierten Fabrikationsumgebung mit den notwendigen technischen Einrichtungen erfolgen, welche insbesondere ein präzises, dauerhaftes und effizientes Anordnen der Membrane 6 und der Feder 7 ermöglichen. Die spezialisierte Fabrikationsumgebung kann entsprechend den gestellten Anforderungen aufgebaut werden und beispielsweise einen abgeschlossenen Raum umfassen, damit die gestellten Anforderungen, wie z.B. eine Reinheit der Fabrikationsumgebung, etc., kostengünstig erreicht werden können.

Der Druckausgleichseinsatz 1 kann nur den Stellkörper 3 umfassen, welcher für das Zusammenwirken mit einem vom Druckausgleichseinsatz 1 getrennt angeordneten Ventilsitz 15 vorgesehen ist. Beim Zusammenbau des Ventils 10 ist gegebenenfalls eine Justierung zwischen dem Stellkörper 3 und dem Ventilsitz 15 erforderlich. Alternativ kann der Ventilsitz 15 ebenfalls am Druckausgleicheinsatz 1 angebracht sein, sodass beim Zusammenbau des Ventils 10 keine weitere Justierungen zwischen dem Stellkörper 3 und dem Ventilsitz 15 erforderlich sind.

Figur 2 zeigt schematisch eine erste Ausführungsform eines Ventils 10 für eine HVAC-Anlage, welches eine oben beschriebene erste Ausführungsform eines Druckausgleichseinsatz 1 enthält.

Wie aus Figur 2 ersichtlich, umfasst das Ventil 10 ein erstes Ventilgehäuseteil 8 und ein zweites Ventilgehäuseteil 9, welche je einen Flansch 8f, 9f aufweisen, um das Ventil an Rohrenden einer HVAC-Anlage anzuordnen, wobei der betreffende Flansch 8f, 9f beispielsweise ein Gewinde aufweist. Das Ventil 10 ist eingerichtet, um einen in diesen Rohren geführten Fluidstrom der HVAC-Anlage zu regeln. Die Ventilgehäuseteile 8, 9 sind zumindest teilweise axialsymmetrisch ausgeführt.

Wie aus Figur 2 ersichtlich, ist das zweite Ventilgehäuseteil 9 in das erste Ventilgehäuseteil 8 gesteckt, wobei ein Gewinde 11 vorgesehen ist, um zwischen den beiden Ventilgehäuseteilen 8, 9 eine Wirkverbindung zu erstellen, also diese miteinander zu verschrauben. Selbstverständlich können die Ventilgehäuseteile 8, 9 in irgendeiner anderen Weise miteinander verbunden werden.

Das erste Ventilgehäuseteil 8 ist eingerichtet, ein Ventilelement 12 zusammen mit zugehörigen Dichtelementen 131, 132 sowie den Druckausgleichseinsatz 1 aufzunehmen. Das Ventilelement 12 ist z.B. kugelförmig ausgebildet.

Das Ventilelement 12 weist eine Nut auf, in welche ein Vorsprung eines Ventilstellorgans 14 eingreift, welches drehbar am ersten Ventilgehäuseteil 8 gehalten ist und aus dem ersten Ventilgehäuseteil 8 herausgeführt ist. Durch das Ventilstellorgan 14 kann das Ventilelement 12 verstellt werden, und damit der Fluidstrom eingestellt werden, welcher das Ventil 10 durchfliesst.

Das Ventilelement 12 weist eingangseitig eine Blende 122 auf, die im Fluidstrom einen von der Stellung des Ventilelements 12 abhängigen Druckabfall erzeugt. Eingangseitig der Blende hat der Fluidstrom den Druck P2 und ausgangseitig der Blende hat der Fluidstrom den Druck P3.

Das zweite Ventilgehäuseteil 9 weist einen Ventilsitz 15 auf, welcher für das Zusammenwirken mit dem Stellkörper 3 des Druckausgleichseinsatzes 1 vorgesehen ist. Der Ventilsitz 15 ist im eingangseitigen Fluidstrom auf einem Träger 16 angebracht, der Ausnehmungen 17 aufweist, durch welche der Fluidstrom vom ersten Ventilgehäuseteil 9 in den Stellkörper 3 des Druckausgleichseinsatz 1 fliessen kann. Eingangseitig hat der Fluidstrom im zweiten Ventilgehäuseteil 9 einen Druck P1.

Wie aus Figur 2 ersichtlich, weist das Ventilelement 12 einen Durchgang 121 auf, welcher in einen Hohlraum 81 des ersten Ventilgehäuseteils 8 führt. Somit herrscht im Hohlraum 81 derselbe Druck P3 wie im Ventilelement 12. Der ausgangseitige und der eingangsseitige Aussendurchmesser des konzentrisch ausgeführten Druckausgleichseinsatzes 1 sowie der Innendurchmesser des ersten Ventilgehäuseteils 8 sind derart aufeinander abgestimmt, dass auf der Ausgangsseite des Druckausgleichseinsatzes 1 zwischen dem Hohlraum 81 des ersten Ventilgehäuseteils 8 und den Gehäusedurchgängen 2d des Druckausgleichseinsatzes 1 eine Fluidverbindung besteht, während auf der Eingangsseite der Druckausgleichseinsatz 1 fluiddicht an das erste Ventilgehäuseteil 8 anschliesst.

Im in Figur 2 dargestellten Ventil 10 herrscht somit im Ventilelement 12 derselbe Druck P3 wie im aussenseitig zugeordneten Fluidbereich P23 des Druckausgleichseinsatz 1, und im Durchlass des Stellkörpers 3 herrscht derselbe Druck P2 wie im innenseitigen Fluidbereich P22 des Druckausgleichseinsatz 1. Wie weiter oben schon beschrieben, ergibt sich wegen der Verschiebung der Membran 6 aufgrund der Druckdifferenz und der Federkraft des Federelements 7 auch die Verschiebung des Stellkörpers 3, welcher an der Membran 6 befestigt ist, relativ zum Ventilsitz 15. Ist nun der Druck P2 im Stellkörper 3 grösser als der Druck P3 im Ventilelement 12, dann verschiebt sich der Stellkörper 3 in Richtung des Ventilsitz 15, wodurch es aufgrund des verkleinerten Durchlass beim Ventilsitz 15 zu einem grösseren Druckabfall zwischen dem eingangseitigen Druck P1 und dem Druck im Stellkörper P2 kommt. Daraus ergibt sich eine konstante Druckdifferenz über dem Ventilelement 12.

Das in Figur 2 schematisch gezeigte Ventil 10 lässt sich wie nachfolgend beschrieben durch Zusammenfügen der einzelnen Teile einfach herstellen. Zunächst wird das Ventilstellorgan 14 in das erste Ventilgehäuseteil 8 eingesetzt. Dann werden das Ventilelement 12 und die Dichtelemente 131, 132 eingesetzt. Als nächstes wird der Druckausgleichseinsatz 1 eingesetzt. Und schliesslich wird das zweite Ventilgehäuseteil 9 in das erste Ventilgehäuseteil 8 eingesetzt und damit verschraubt, wobei die Bestandteile des Ventils 10, also insbesondere das Ventilelement 12, die Dichtelemente 131, 132 und der Druckausgleichseinsatz 1 aufgrund der Verschraubung im Ventil 10 gehalten werden.

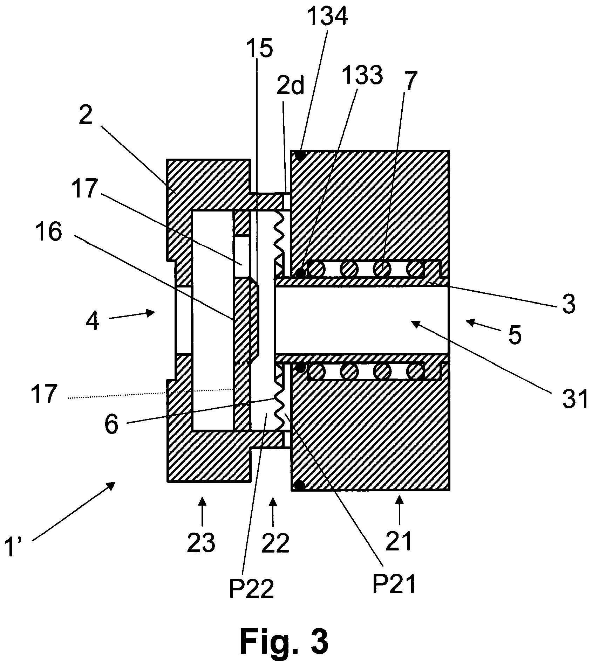

Figur 3 zeigt schematisch eine zweite Ausführungsform eines Druckausgleichseinsatz 1', beim welchem im Gegensatz zur ersten Ausführungsform eines Druckausgleichseinsatz 1 die Eingangsöffnung 4 und die Ausgangsöffnung 5 vertauscht sind. Zwischen der Eingangsöffnung 4 und der Ausgangsöffnung 5 ist ein Stellkörper 3 angeordnet. Ferner ist zwischen der Eingangsöffnung 4 und der Ausgangsöffnung 5 ein Ventilsitz 15 angeordnet. Der Druckausgleichseinsatz 1' weist wiederum ein Gehäuse 2 auf, in welchem die Bestandteile des Druckausgleichseinsatz 1' enthalten sind.

Der Ventilsitz 15 ist eingangsseitig an einem Träger 16 angebracht. Der Träger 16 weist Ausnehmungen 17 auf, welche von einem Fluidstrom durchströmt werden können.

Wie aus Figur 3 ersichtlich, ist der Stellkörper 3 durch eine Membran 3 gehalten, welche einen innenseitigen Fluidbereich P22 von einem aussenseitig zugeordneten Fluidbereich P21 abtrennt. Der innenseitige Fluidbereich P22 ist über die Ausnehmungen 17 mit der Eingangsöffnung 4 fluidverbunden. Der aussenseitig zugeordnete Fluidbereich P21 ist über Durchgangsöffnungen 2d mit der Aussenseite des Druckausgleichseinsatz 1' fluidverbunden.

Der Stellkörper 3 ist eingerichtet, einen Fluidstrom zumindest teilweise zu führen. Somit wird ein Fluidstrom, der in die Eingangsöffnung 4 eintritt über die Ausnehmungen 17 des Träger 16 sowie über den Stellkörper 3 zur Ausgangsöffnung 5 geführt.

Der Stellkörper 3 ist am Gehäuse 2 des Druckausgleichseinsatz 1' verschiebbar angebracht. Ein zwischen einem Vorsprung des Gehäuses und einem Vorsprung des Stellkörpers 3 angebrachtes Federelement 7 bewirkt, dass der Stellkörper 3 in Richtung der Ausgangsöffnung gedrückt wird, wobei wie in Figur 3 schematisch dargestellt eine Begrenzungsvorrichtung vorgesehen ist, damit der Stellkörper 3 im Druckausgleichseinsatz 1' gehalten ist.

Eine Druckdifferenz zwischen dem innenseitigen Fluidbereich P22 und dem aussenseitig zugeordneten Fluidbereich P21 wird von der Membran 6 an den Stellkörper 3 übertragen, welcher entsprechend der Druckdifferenz mit dem Ventilsitz 15 zusammenwirkt. Ist beispielsweise der Druck im aussenseitig zugeordneten Fluidbereich P21 grösser als der Druck im innenseitigen Fluidbereich P22, dann wird der Stellkörper 3 entgegen der Federkraft des Federelements 7 in Richtung des Ventilsitz 15 gedrückt, wobei durch das Zusammenwirken zwischen dem Stellkörper 3 und dem Ventilsitz 15 der Druckabfall des Fluidstroms vergrössert wird. Daraus ergibt sich bei in einem nachfolgend beschriebenen Ventil 10' mit einem Ventilelement 12 und eingebauten Druckausgleichseinsatz 1' eine konstante Druckdifferenz über dem Ventilelement 12.

Die erste Ausführungsform des Druckausgleichseinsatz 1 gemäss Figur 1a, 1b und die zweite Ausführungsform des Druckausgleichseinsatz 1' weisen einen ersten Abschnitt des Gehäuses 21, einen zweiten Abschnitt des Gehäuses 22 und einen dritten Abschnitt des Gehäuses 23 auf. Der erste Abschnitt des Gehäuses 21 ist für das Zusammenwirken mit einem Gehäuse des Ventils 10, 10' vorgesehen, in welches der Druckausgleichseinsatz 1, 1' eingebaut wird. Der zweite Abschnitt des Gehäuses ist zur Bildung einer Fluidverbindung zum aussenseitig zugeordneten Fluidbereich P23, P21 vorgesehen. Der dritte Abschnitt ist zur Bildung eines Spalts zwischen dem Druckausgleichseinsatz 1, 1' und dem Gehäuse des Ventils 10, 10' vorgesehen, in welches der Druckausgleicheinsatz 1, 1' eingebaut wird. Beispielsweise hat der zylinderförmige erste Abschnitt 21 einen Durchmesser welcher grösser ist als der Durchmesser des zylinderförmigen dritten Abschnitts 23, welcher wiederum grösser ist als der Durchmesser des zylinderförmigen zweiten Abschnitts 22. Solche Ausführungen von Druckausgleichseinsätzen 1, 1' sind insbesondere für Ventile 10, 10' geeignet, welche zylinderförmige Aufnahmebereiche für den betreffenden Druckausgleichseinsatz 1, 1' aufweisen.

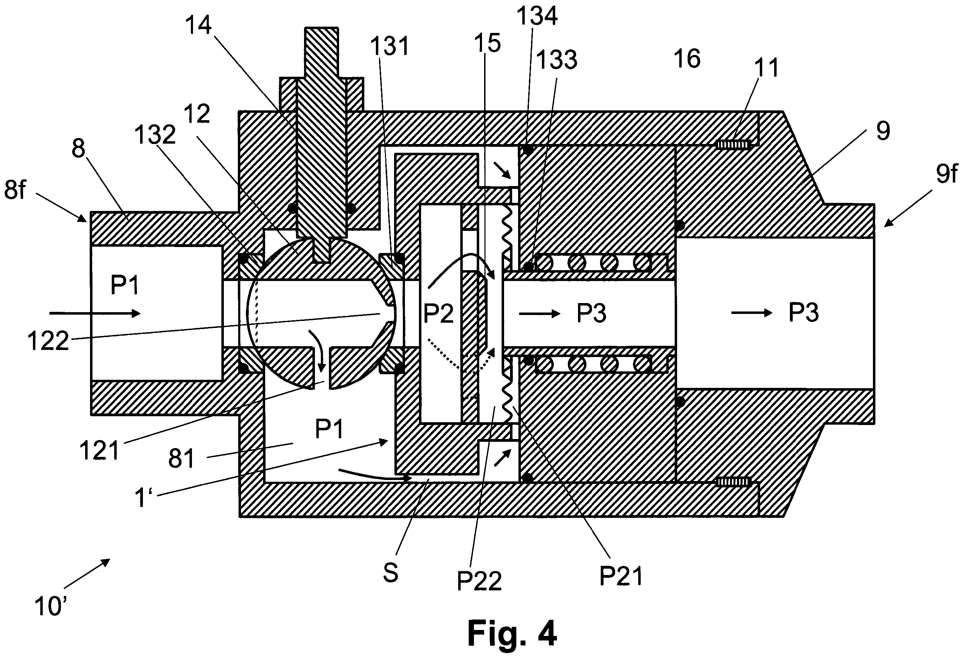

Figur 4 zeigt schematisch eine zweite Ausführungsform eines Ventils 10' für eine HVAC-Anlage, welches eine oben beschriebene zweite Ausführungsform eines Druckausgleichseinsatz 1' enthält. Das Ventil 10' umfasst wiederum ein Ventilelement 12 mit einer Blende 122 und einem Durchgang 121 sowie ein Ventilstellorgan 14. Ferner umfasst das Ventil 10' ein erstes Ventilgehäuseteil 8 und ein zweites Ventilgehäuseteil 9, welche miteinander über eine Schraubverbindung 11 verschraubbar sind.

Gegenüber der in Figur 2 dargestellten ersten Ausführungsform eines Ventils 10 sind bei der in Figur 4 dargestellten zweiten Ausführungsform der Eingangsbereich und der Ausgangsbereich vertauscht. In Figur 4 ist der Flansch 8f des ersten Ventilgehäuseteils 8 dem eingangseitigen Bereich zugeordnet und der Flansch 9f des zweiten Ventilgehäuseteils 9 ist dem ausgangsseitigen Bereich des Ventils 10' zugeordnet.

Ein durch das Ventil 10' geregelter Fluidstrom strömt auf der Eingangsseite beim Flansch 8f des ersten Ventilgehäuseteils 8 mit dem Druck P1 in das Ventil 10' hinein und verlässt das Ventil auf der Ausgangsseite beim Flansch 9f des zweiten Ventilgehäuseteils 9 mit einem Druck P3. Über der Blende 122 des Stellelements 12 kommt es zu einem Druckabfall, sodass der nach der Blende 122 weitergeführte Fluidstrom einen Druck P2 aufweist. Der Druckabfall ist von der Stellung des Stellelements 12 respektive der Blende 122 abhängig. Der Fluidstrom wird nach der Blende 122 des Stellelements 12 in den Druckausgleichseinsatz 1' geführt. Zunächst durchfliesst der Fluidstrom die Ausnehmungen 17 des Trägers 16, auf welchem der Ventilsitz 15 gehalten ist. Anschliessend durchfliesst der Fluidstrom den Stellkörper 3. Im Stellkörper 3 wird der Fluidstrom mit einem Druck P3 geführt. Der Druckabfall zwischen dem Druck P2 und dem Druck P3 ist von der Stellung des Stellkörpers 3 respektive vom Zusammenwirken des Stellkörpers 3 mit dem Ventilsitz 15 abhängig. Daraus ergibt sich eine konstante Druckdifferenz über dem Ventilelement 12.

Bei der ersten und der zweiten Ausführungsform des Ventils 10, 10' führt der Spalt S zwischen dem Druckausgleichseinsatz 1, 1' und dem Ventil 10, 10' zu einer dämpfenden Wirkung für die Membran 6 respektive den Stellkörper 3, falls der Spalt genügend klein ist. Ferner führt der Spalt S, auch wenn dieser nicht besonders klein ist, zu einer Verringerung der Verschmutzungsgefahr im Aussenbereich des Druckausgleichseinsatz 1, 1' sowie im aussenseitig zugeordneten Fluidbereich P23, P21. Zusätzlich oder alternativ zu einer dämpfenden Wirkung des Spalts S kann durch eine entsprechende Dimensionierung der Gehäusedurchgänge 2d eine dämpfende Wirkung für die Membran 6 respektive den Stellkörper 3 erzielt werden.

Der Spalt S zwischen dem Druckausgleichseinsatz 1, 1' und dem Ventil 10, 10' kann als vollständig umlaufender Spalt vorgesehen sein. Der Druckausgleichseinsatz 1, 1' wird in diesem Fall ausschliesslich im ersten Abschnitt 21 des Druckausgleichseinsatz 1, 1' gegenüber dem Ventil 10, 10' abgestützt. Alternativ kann der Spalt S durch Spaltsegmente oder Spaltbohrungen gebildet sein, sodass der Druckausgleicheinsatz 1, 1' auch im dritten Abschnitt 23 des Druckausgleichseinsatz 1, 1' gegenüber dem Ventil 10, 10' abgestützt ist.

Wie aus Figur 2 und Figur 4 ersichtlich, kann eingangseitig zwischen dem Stellkörper 3 und dem Gehäuse 2 des Druckausgleicheinsatz 1, 1' ein Dichtelement 133 angeordnet sein. Ferner kann eingangsseitig zwischen dem Gehäuse 2 des Druckausgleichseinsatz 1, 1' und dem ersten Ventilgehäuseteil 8 des Ventils 10, 10' ein weiteres Dichtelement 134 vorgesehen sein. Die Dichtelemente 133, 134 verbessern die Dichtwirkung zwischen den betreffenden Bauteilen.

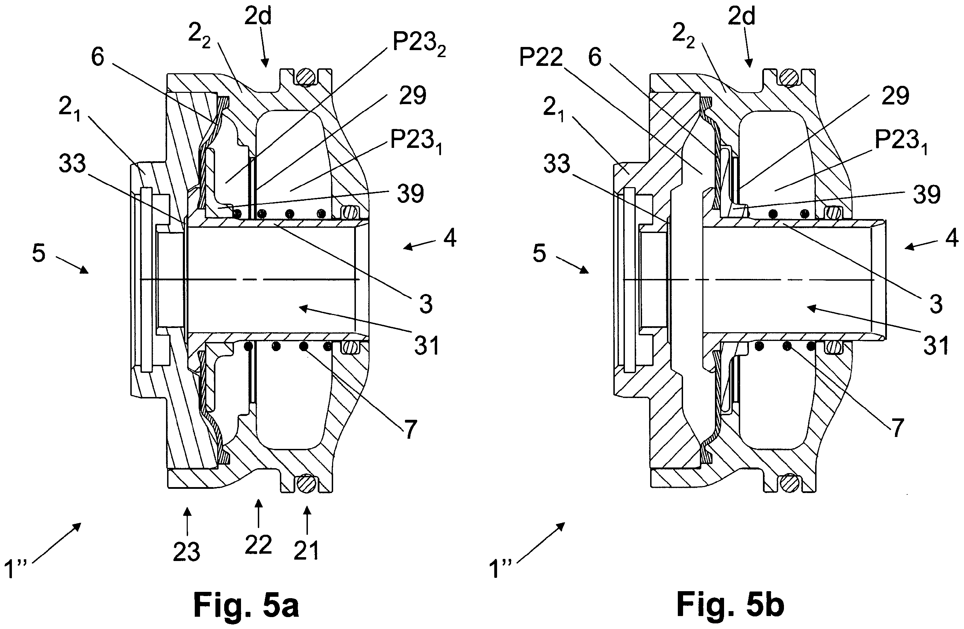

Figur 5a und Figur 5b zeigen eine dritte Ausführungsform eines Druckausgleichseinsatz 1", welcher im Wesentlichen der oben beschriebenen ersten Ausführungsform des Druckausgleichseinsatz 1 entspricht und sich davon durch konstruktive Einzelheiten unterscheidet. Der Druckausgleichseinsatz 1" weist ein zweiteiliges Gehäuse 2₁, 2₂ auf, wobei ein erster Gehäuseteil 2₁ beispielsweise über einen Presssitz, eine Schraubverbindung, etc. mit einem zweiten 2₂ Gehäuseteil verbunden ist. Die Membrane 6, an welcher der Stellkörper 3 gehalten ist, ist zwischen dem ersten Gehäuseteil 2, und dem zweiten Gehäuseteil 2₂ fixiert. In Figur 5a ist der Druckausgleichseinsatz 1" in einer Stellung dargestellt, bei welcher der Stellkörper 3 bei der Eingangsöffnung 4 bündig mit dem Gehäuse abschliesst, während in Figur 5b der Druckausgleichseinsatz 1" in einer Stellung dargestellt ist, bei welcher der Stellkörper 3 bei der Eingangsöffnung 4 aus dem Gehäuse hervorsteht.

Die Figur 5a entspricht wiederum der Position des Stellkörpers 3 bei welcher im Zusammenwirken mit einem Ventilsitz 15 eine maximaler Durchfluss erstellt ist, währen die Figur 5b der Position des Stellkörpers 3 entspricht, bei welcher dieser Durchfluss minimal ist.

Der aussenseitig zugeordnete Fluidbereich des Gehäuses des in Figur 5a dargestellten Druckausgleichseinsatz 1" umfasst zwei Bereiche P23₁, P23₂, zwischen welchen ein Begrenzungsanschlag 29 ausgebildet ist. Der Begrenzungsanschlag 29 ist beispielsweise an der Innenseite des zweiten Gehäuseteils 2₂ als umlaufender Vorsprung ausgebildet. Wie aus Figur 5a ersichtlich, ist in entsprechender Weise am Stellkörper 3 ein Gegenanschlag 39 angebracht, welcher beispielsweise scheibenförmig ausgebildet ist. Dadurch wird die maximale Auslenkung des Stellkörpers 3 begrenzt. Der Begrenzungsanschlag 29 und der Gegenanschlag 39 bilden somit eine Begrenzungseinrichtung welche verhindert, dass der Stellkörper 3 einen entsprechenden Ventilsitz 15 eines Ventils beschädigt.

Durch die Verschiebung des Stellkörpers bildet sich zwischen dem ersten Gehäuseteil 2, und der Membran 6 wie in Figur 5b schematisch dargestellt ein deutlich erkennbarer innenseitiger Fluidbereich P22 des Gehäuses. Dieser innenseitige Fluidbereich P22 des Gehäuses ist in Figur 5a praktisch nicht erkennbar, da die Membran 6 am ersten Gehäuseteil 2₁ anliegt. Stattdessen weist wie aus Figur 5a ersichtlich der aussenseitig zugeordnete Fluidbereich des Gehäuses den zweiten Bereich P23₂ auf, welcher in Figur 5b praktisch nicht erkennbar ist, da der Gegenanschlag 39 am Begrenzungsanschlag 29 anliegt.

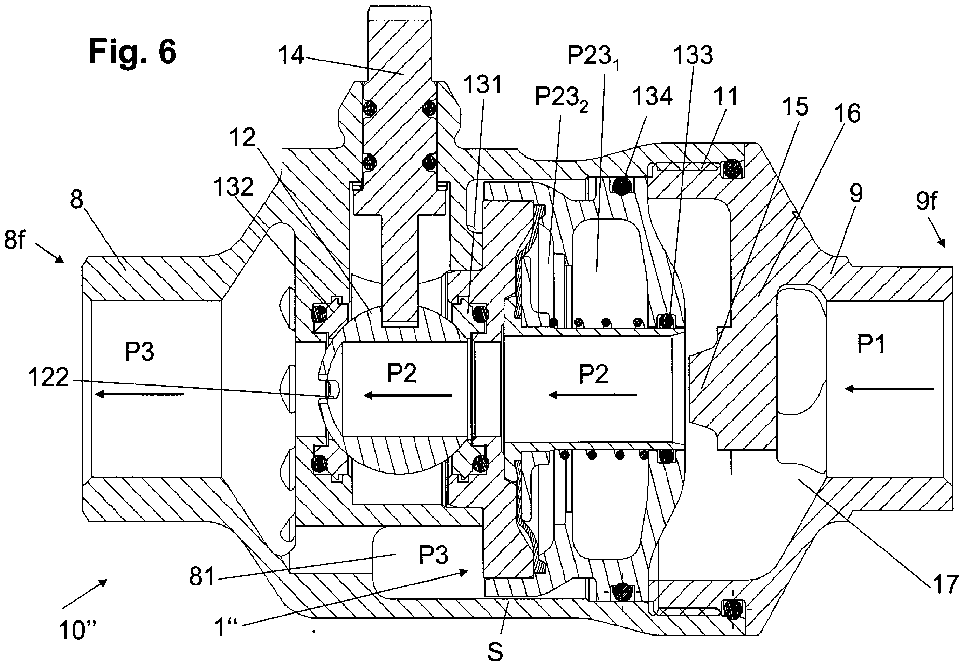

Figur 6 zeigt eine dritte Ausführungsform eines Ventils 10" mit einer eingesetzten dritten Ausführungsform eines Druckausgleichseinsatz 1', welche im Wesentlichen der oben beschriebenen ersten Ausführungsform des Ventils 10 entspricht und sich davon durch konstruktive Einzelheiten unterscheidet. Die Blende 122 ist am Ventilelement 12 auf der Ausgangsseite angeordnet, so dass sich sowohl im Stellkörper als auch im Ventilelement 12 der Druck P2 ergibt. Nach der Blende 122 ergibt sich wiederum der Druck P3, welcher über den Spalt S und die Gehäusedurchgänge 2d (in Figur 6 nicht ersichtlich) in den aussenseitig zugeordneten Fluidbereich (welcher die Bereiche P23₁, P23₂ umfasst) des Gehäuses geführt wird. Die Verschiebung des Stellkörpers 3 relativ zum Ventilsitz 15 ergibt sich aus der Differenz zwischen dem Druck P2 und dem Druck P3. Damit ergibt sich zwischen dem Stellkörper 3 und dem Ventilsitz 15 eine Öffnung, welche entsprechend der Differenz zwischen dem Druck P2 und dem Druck P3 grösser oder kleiner ausfällt.

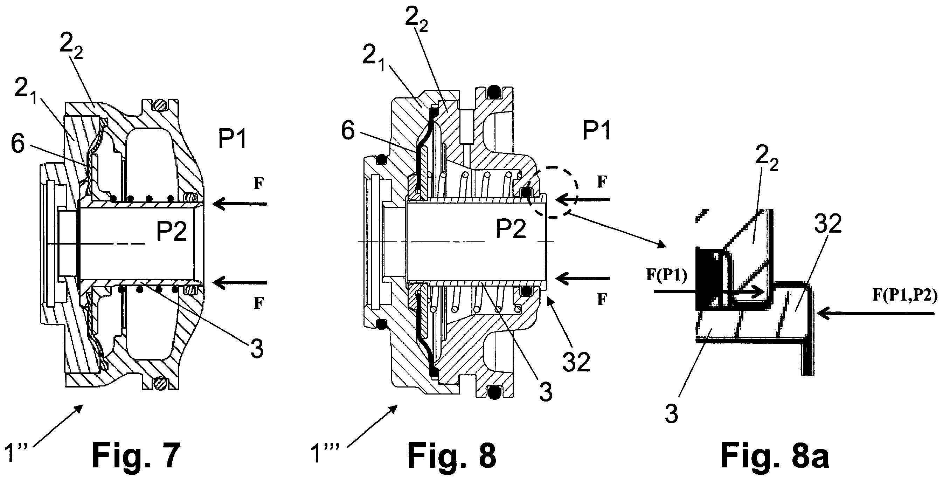

Figur 7 zeigt die dritte Ausführungsform eines Druckausgleichseinsatz 1" wie in Figur 5a und Figur 5b dargestellt. Der Stellkörper 3 ist in einem zweiteiligen Gehäuse 2₁, 2₂ geführt. Beim Eintritt des Fluids in den Stellkörper 3 reduziert sich der Druck des einströmenden Fluids von einem Druck P1 auf einen tieferen Druck P2.

Wie in Figur 7 dargestellt, wirkt eingangsseitig auf die Stirnseite des Stellkörpers 3 eine Kraft F, welche vom Druck P1 abhängt. Die vom Druck P2 verursachte Kraft wird ausgangsseitig des Stellkörpers 3 durch eine gleich grosse Kraft automatisch kompensiert und spielt deshalb keine Rolle.

Figur 8 zeigt eine vierte Ausführungsform eines Druckausgleichseinsatz 1'''. Der Stellkörper 3 ist in einem zweiteiligen Gehäuse 2₁, 2₂ geführt. Beim Eintritt des Fluids in den Stellkörper 3 reduziert sich der Druck des einströmenden Fluids von einem eingangsseitigen Druck P1 auf einen tieferen innenseitigen Druck P2. Wie in Figur 8 dargestellt, weist der Stellkörper 3 einen lippenförmigen Bereich 32 auf.

Der lippenförmige Bereich 32 ist eingangsseitig des Stellkörpers 3 ausgebildet und hat eine flanschförmige Gestalt. Durch den lippenförmigen Bereich 32 am Eingang des Stellkörpers 3 wirkt eine zusätzliche Kraft F(P1) auf den Stellkörper 3.

Figur 8a zeigt die in Figur 8 gestrichelt eingezeichnete Detailansicht des lippenförmigen Bereichs 32. Die auf den Stellkörper 3 wirkende Kraft setzt sich nun aus der in Richtung des Fluidstroms wirkenden Kraft F(P1, P2) und entgegen der Richtung des Fluidstroms wirkenden Kraft F(P1) zusammen. Die beiden Kräfte F(P1, P2) und F(P1) wirken in entgegengesetzte Richtungen. Die resultierende Kraft die auf den Stellkörper 3 wirkt ist damit unabhängig vom eingangsseitigen Druck P1.

Für ein Ventil mit einer eingebauten vierten Ausführungsform eines Druckausgleichseinsatz 1''' ist somit auch der Durchfluss resp. die Durchflussmenge durch das Ventil unabhängig vom eingangsseitigen Druck P1.

Die Dimensionierung des lippenförmigen Bereichs 32 kann unterschiedlich erfolgen. Der lippenförmige Bereich 32 kann direkt am Ende des Stellkörpers 3 ausgebildet sein, oder vom Ende des Stellkörpers 3 beabstandet sein. Der lippenförmige Bereich 32 ist in der Form einer Scheibe oder Rings ausgebildet, wobei der Durchmesser grösser ist als der Durchmesser des Stellkörpers. Der Durchmesser des lippenförmigen Bereichs 32 ist beispielsweise um die Wandstärke des Stellkörpers 3 grösser als der Durchmesser des Stellkörpers 3. Andere Durchmesser sind möglich. Bei einem Durchmesser des lippenförmigen Bereichs 32, der nur unwesentlich grösser ist als der Durchmesser des Stellkörpers 3, kann die auf den Stellkörper resultierende Kraft noch vom eingangsseitigen Druck P1 abhängig sein. Erst bei einem Durchmesser des lippenförmigen Bereichs 32, der deutlich grösser ist als der Durchmesser des Stellkörpers 3, also z.B. um die Wandstärke, die doppelte Wandstärke, die dreifache Wandstärke etc. des Stellkörpers 3 grösser, ist die resultierende Kraft, die auf den Stellkörper 3 wirkt, nicht mehr vom eingangsseitigen Druck P1 abhängig.

Die Dimensionierung des lippenförmigen Bereichs 32 kann experimentell erfolgen, unter Berücksichtigung der folgenden Zusammenhänge. Der eingangsseitige Druck P1 kann sehr viel grösser sein als der innenseitige Druck P2 oder der aussenseitige Druck P3. Deshalb kann bereits eine kleine Lippe eine grosse Auswirkung auf die Unabhängigkeit der Durchflussmenge vom eingangsseitigen Druck P1 haben. Die Kraft F(P1, P2), deren Auswirkung wie in Fig. 8a dargestellt kompensiert werden soll, kann von einer Anströmgeometrie innerhalb des Ventils 10 abhängen, wobei bei bestimmten Anströmgeometrien die Grösse des lippenförmigen Bereichs 32 praktisch keine Rolle spielt, solange eine Minimalgrösse nicht unterschritten wird. In einer Variante liegt die wirksame Grösse der lippenförmigen Bereichs 32 etwa in der Grössenordnung der Wandstärke des Stellkörpers 3.

### BEZUGSZEICHEN

- 1: Druckausgleichseinsatz
- 2: Gehäuse
- 2₁, 2₂: erster und zweiter Gehäuseteil
- 2d: Gehäusedurchgänge
- 21: erster Abschnitt des Gehäuses
- 22: zweiter Abschnitt des Gehäuses
- 23: dritter Abschnitt des Gehäuses
- P22: innenseitiger Fluidbereich des Gehäuses
- P23: aussenseitig zugeordneter Fluidbereich des Gehäuses
- P23₁, P23₂: erster und zweiter Bereich des aussenseitig zugeordneten Fluidbereichs
- 3: Stellkörper
- 31: Einrichtung des Stellkörpers zum Führen des Fluidstroms
- 32: lippenförmiger Bereich des Stellkörpers
- 33: Stellkörperdurchgänge
- 4: Eingangsöffnung
- 5: Ausgangsöffnung
- 6: Membran
- 7: Feder
- 8: erstes Ventilgehäuseteil
- 8f: Flansch des ersten Ventilgehäuseteils
- 81: Hohlraum des ersten Ventilgehäuseteils
- 9: zweites Ventilgehäuseteil
- 9f: Flansch des zweiten Ventilgehäuseteils
- 10: Ventil
- 11: Gewinde
- 12: Ventilelement
- 121: Durchgang
- 122: Blende
- 131, 132: Dichtelemente
- 14: Ventilstellorgan
- 15: Ventilsitz
- 16: Träger
- 17: Ausnehmungen
- P1: eingangseitiger Druck
- P2: innenseitiger Druck
- P3: aussenseitiger Druck

## Patentansprüche

1. Ventil (10) zum Regeln eines Fluidstroms insbesondere einer HVAC-Anlage mit einem eingebauten Druckausgleichseinsatz (1),
welcher Druckausgleichseinsatz (1) ein Gehäuse (2) mit einem daran verschiebbar angebrachtem Stellkörper (3) umfasst, welcher einen offenen Querschnitt aufweist, um den durch das Ventil (10) geregelten Fluidstrom zumindest teilweise zu führen,
wobei der Stellkörper (3) abhängig von einer im Fluidstrom herrschenden Druckdifferenz, die von der Stellung eines verstellbares Ventilelements (1 2) des Ventils (10) abhängt, zur Regelung des Fluidstroms mit einem Ventilsitz (15) des Ventils (10) zusammenzuwirken,
wobei der Stellkörper (3) von einer Membran (6) verschiebbar gehalten ist,
wobei die Membran (6) einen Hohlraum des Gehäuses (2) in einen innenseitigen Fluidbereich (P22) und einen aussenseitig zugeordneten Fluidbereich (P23, P21) unterteilt,
wobei der innenseitige Fluidbereich (P22) mit dem vom Stellkörper (3) geführten Fluidstrom fluidverbunden ist,
wobei der aussenseitig zugeordnete Fluidbereich (P23, P21) mit einem Aussenbereich des Gehäuses (2) fluidverbunden ist,
wobei der Stellkörper (3) von einem Federelement (7) vorgespannt ist und sich die aktuelle Verschiebung des Stellkörpers (3) aus einer Druckdifferenz zwischen einem Druck im innenseitigen Fluidbereich (P22) und einem Druck im aussenseitig zugeordneten Fluidbereich (P23, P21) ergibt,
welcher Druckausgleichseinsatz (1) als vormontierte Baugruppe in das Ventil (10) eingesetzt ist,
wobei das Ventil ein verstellbares, kugelförmig ausgebildetes Ventilelement (12) umfasst,
wobei ein erstes Ventilgehäuseteil (8) eingerichtet ist, das Ventilelement (12) und den Druckausgleichseinsatz (1) aufzunehmen,
wobei das Ventilelement (12) eine Nut aufweist, in welche ein Vorsprung eines Ventilstellorgans (14) eingreift, welches drehbar am ersten Ventilgehäuseteil (8) gehalten ist und aus dem ersten Ventilgehäuseteil (8) herausgeführt ist, und
wobei durch das Ventilstellorgan (14) das Ventilelement (12) verstellt, und damit der Fluidstrom eingestellt werden kann, welcher das Ventil (10) durchfliesst.

2. Ventil (10) nach Anspruch 1, **dadurch gekennzeichnet, dass** der Stellkörper (3) zwischen einer Eingangsöffnung (4) und einer Ausgangsöffnung (5) des Gehäuses (2) derart angeordnet ist, dass sich der Stellkörper (3) entsprechend einer Druckdifferenz zwischen dem Druck eines im Druckausgleichseinsatz (1) geführten Fluidstroms und dem Druck eines ausserhalb des Druckausgleichseinsatz (1) geführten Fluidstroms für das Zusammenwirken mit dem Ventilsitz (15) relativ zum Ventilsitz (15) verschiebt.

3. Ventil (10) nach einem der Ansprüche 1 oder 2, **dadurch gekennzeichnet, dass** das Gehäuse (2) und der Stellkörper (3) im Wesentlichen zylinderförmig ausgeführt sind.

4. Ventil (10) nach einem der Ansprüche 1 bis 3, **dadurch gekennzeichnet, dass** das Gehäuse (2) mehrere Gehäuseteile aufweist, welche mit einer oder mehreren Verbindungseinrichtungen miteinander verbindbar sind.

5. Ventil (10) nach einem der Ansprüche 1 bis 4, **dadurch gekennzeichnet, dass** eine oder mehrere Begrenzungseinrichtungen (29, 39) angeordnet sind, welche die Verschiebung des Stellkörpers (3) relativ zum Ventilsitz (15) begrenzen.

6. Ventil (10) nach einem der Ansprüche 1 bis 5, **dadurch gekennzeichnet, dass** eingangsseitig zwischen dem Gehäuse (2) und dem Stellkörper (3) ein Dichtelement (133) angebracht ist.

7. Ventil (10) nach Anspruch 1, **dadurch gekennzeichnet, dass** die Membran (6) zur Halterung des Stellkörpers (3) eine oder mehrere wellenförmige Prägungen aufweist.

8. Ventil (10) nach einem der Ansprüche 1 bis 7, **dadurch gekennzeichnet, dass** das Gehäuse (2) einen ersten Abschnitt (21) aufweist, welcher für die Abdichtung zu einem Gehäuse des Ventils (10) eingerichtet ist, und dass das Gehäuse (2) einen dritten Abschnitt (23) aufweist, welcher eingerichtet ist, eine Fluidverbindung in der Form eines Spalts (S) zwischen dem Gehäuse (2) und dem Gehäuse des Ventils (10) herzustellen, wobei der Spalt (S) eine Fluidverbindung zum aussenseitig zugeordneten Fluidbereich (P23, P21) zur Verfügung stellt.

9. Ventil (10) nach einem der Ansprüche 1 bis 8, **dadurch gekennzeichnet, dass** der aussenseitig zugeordnete Fluidbereich (P23) über eine oder mehrere Öffnungen (2d) in einer Wand des Gehäuses (2) mit der Aussenseite des Gehäuses (2) fluidverbunden ist.

10. Ventil (10) nach einem der Ansprüche 1 bis 9, **dadurch gekennzeichnet, dass** eingangsseitig ein erster Abschnitt (21) des Gehäuses (2) eine umlaufende Nut zur Aufnahme eines Dichtelements (134) aufweist, welches für die Abdichtung zu einem Gehäuse des Ventils (10) eingerichtet ist.

11. Ventil (10) nach einem der Ansprüche 1 bis 10, **dadurch gekennzeichnet, dass** eingangsseitig an einem dritten Abschnitt (23) des Gehäuses (2) eine ringförmige Nut zur Aufnahme eines Dichteinsatzes (132) für das Ventilelement (12) des Ventils (10) angebracht ist.

12. Ventil (10) nach einem der Ansprüche 1 bis 11, **dadurch gekennzeichnet, dass** zwischen dem Gehäuse (2) des Druckausgleichseinsatz (1) und einem Gehäuse des Ventils (10) ein Spalt (S) ausgebildet ist, welcher Spalt (S) für das Erstellen einer Fluidverbindung zum aussenseitig zugeordneten Fluidbereich (P23, P21) des Druckausgleichseinsatzes (1) vorgesehen ist und derart ausgeführt ist, dass das Eindringen von Schmutz in den Druckausgleichsatz (1) reduziert wird und/oder dass eine hydraulische Dämpfung der Bewegung des Stellkörpers (3) des Druckausgleichseinsatz (1) bewirkt wird.

13. Ventil (10) nach einem der Ansprüche 1 bis 12, **dadurch gekennzeichnet, dass** ein zweites Ventilgehäuseteil (9) zum Fixieren des Druckausgleichseinsatzes (1) im ersten Ventilgehäuseteil (8) eingerichtet ist, wobei das erste und das zweite Ventilgehäuseteil (8, 9) eingerichtet sind, dass eine Wirkverbindung (11) zwischen dem ersten und dem zweiten Ventilgehäuseteil (8, 9) erstellbar ist.

## Claims

1. Valve (10) for regulation of a fluid flow, in particular of an HVAC system, with an installed pressure equalization insert (1),
which pressure equalization insert (1) includes a housing (2) with a positioning body (3) which is fitted displaceably thereto and which comprises an open cross section so as to at least partially guide the fluid flow regulated by the valve (10), wherein, for regulation of the fluid flow, the positioning body (3) interacts with a valve seat (15) of the valve (10) in a manner dependent on a pressure difference which prevails in the fluid flow and which depends on the position of an adjustable valve element (12) of the valve (10),
wherein the positioning body (3) is held displaceably by a diaphragm (6),
wherein the diaphragm (6) subdivides a cavity of the housing (2) into an inner-side fluid region (P22) and a fluid region (P23, P21) associated with the outer side,
wherein the inner-side fluid region (P22) is connected fluidically to the fluid flow guided by the positioning body (3),
wherein the fluid region (P23, P21) associated with the outer side is connected fluidically to an outer region of the housing (2),
wherein the positioning body (3) is preloaded by a spring element (7), and the present displacement of the positioning body (3) results from a pressure difference between a pressure in the inner-side fluid region (P22) and pressure in the fluid region (P23, P21) associated with the outer side,
which pressure equalization insert (1) is inserted as a pre-assembled unit into the valve (10), wherein the valve includes an adjustable spherical valve element (12),
wherein a first valve housing part (8) is configured to accommodate the valve element (12) and the pressure equalization insert (1),
wherein the valve element (12) comprises a groove into which a projection of a valve positioning member (14) engages, which valve positioning member is held rotatably on the first valve housing part (8) and is led out of the first valve housing part (8), and
wherein, by way of the valve positioning member (14), the valve element (12) can be adjusted and, consequently, the fluid flow which flows through the valve (10) can be set.

2. Valve (10) according to Claim 1, **characterized in that** the positioning body (3) is arranged between an inlet opening (4) and an outlet opening (5) of the housing (2) in such a way that, for the interaction with the valve seat (15), the positioning body (3) is displaced relative to the valve seat (15) according to a pressure difference between the pressure of a fluid flow guided in the pressure equalization insert (1) and the pressure of a fluid flow guided outside the pressure equalization insert (1).

3. Valve (10) according to either of Claims 1 and 2, **characterized in that** the housing (2) and the positioning body (3) are of substantially cylindrical form.

4. Valve (10) according to one of Claims 1 to 3, **characterized in that** the housing (2) comprises multiple housing parts which can be connected to one another by way of one or more connecting devices.

5. Valve (10) according to one of Claims 1 to 4, **characterized in that** there are arranged one or more limitation devices (29, 39) which limit the displacement of the positioning body (3) relative to the valve seat (15).

6. Valve (10) according to one of Claims 1 to 5, **characterized in that** a sealing element (133) is fitted between the housing (2) and the positioning body (3) at the inlet side.

7. Valve (10) according to Claim 1, **characterized in that** the diaphragm (6) for holding the positioning body (3) comprises one or more undulating embossments.

8. Valve (10) according to one of Claims 1 to 7, **characterized in that** the housing (2) comprises a first section (21), which is configured for sealing with respect to a housing of the valve (10), and **in that** the housing (2) comprises a third section (23), which is configured to establish a fluidic connection in the form of a gap (S) between the housing (2) and the housing of the valve (10), wherein the gap (S) provides a fluidic connection to the fluid region (P23, P21) associated with the outer side.

9. Valve (10) according to one of Claims 1 to 8, **characterized in that** the fluid region (P23) associated with the outer side is connected fluidically to the outer side of the housing (2) via one or more openings (2d) in a wall of the housing (2) .

10. Valve (10) according to one of Claims 1 to 9, **characterized in that**, on the inlet side, a first section (21) of the housing (2) comprises a circumferential groove for accommodating a sealing element (134) which is configured for sealing with respect to a housing of the valve (10).

11. Valve (10) according to one of Claims 1 to 10, **characterized in that** an annular groove for accommodating a sealing insert (132) for the valve element (12) of the valve (10) is formed on a third section (23) of the housing (2) at the inlet side.

12. Valve (10) according to one of Claims 1 to 11, **characterized in that** a gap (S) is formed between the housing (2) of the pressure equalization insert (1) and a housing of the valve (10), which gap (S) is provided for the formation of a fluidic connection to that fluid region (P23, P21) of the pressure equalization insert (1) which is associated with the outer side, and is formed in such a way that the ingress of dirt into the pressure equalization insert (1) is reduced, and/or **in that** hydraulic damping of the movement of the positioning body (3) of the pressure equalization insert (1) is effected.

13. Valve (10) according to one of Claims 1 to 12, **characterized in that** a second valve housing part (9) is configured to fix the pressure equalization insert (1) in the first valve housing part (8), wherein the first and second valve housing parts (8, 9) are configured in such a way that an operative connection (11) can be formed between the first and second valve housing parts (8, 9).

## Revendications

1. Soupape (10) pour la régulation d'un courant de fluide notamment d'une installation CVCA munie d'un insert de compensation de pression (1) intégré,
lequel insert de compensation de pression (1) comprend un boîtier (2) muni d'un corps de réglage (3) monté de manière coulissante sur celui-ci, qui comprend une section transversale ouverte afin d'acheminer au moins partiellement le courant de fluide régulé par la soupape (10),
le corps de réglage (3) coopérant, en fonction d'une différence de pression régnant dans le courant de fluide, qui dépend de la position d'un élément de soupape réglable (12) de la soupape (10), avec un siège de soupape (15) de la soupape (10) pour la régulation du courant de fluide,
le corps de réglage (3) étant soutenu de manière coulissante par une membrane (6),
la membrane (6) divisant un espace creux du boîtier (2) en une zone de fluide côté intérieur (P22) et une zone de fluide associée côté extérieur (P23, P21),
la zone de fluide côté intérieur (P22) étant en liaison fluidique avec le courant de fluide acheminé par le corps de réglage (3),
la zone de fluide associée côté extérieur (P23, P21) étant en liaison fluidique avec une zone extérieure du boîtier (2),
le corps de réglage (3) étant précontraint par un élément ressort (7) et le coulissement actuel du corps de réglage (3) résultant d'une différence de pression entre une pression dans la zone de fluide côté intérieur (P22) et une pression dans la zone de fluide associée côté extérieur (P23, P21),
lequel insert de compensation de pression (1) étant inséré dans la soupape (10) en tant que module préassemblé,
la soupape comprenant un élément de soupape (12) réglable, configuré sous forme sphérique,
une première partie de boîtier de soupape (8) étant conçue pour recevoir l'élément de soupape (12) et l'insert de compensation de pression (1),
l'élément de soupape (12) comprenant une rainure, dans laquelle une protubérance d'un organe de réglage de soupape (14) pénètre, qui est soutenue de manière rotative sur la première partie de boîtier de soupape (8) et qui sort de la première partie de boîtier de soupape (8), et
l'élément de soupape (12) effectuant un réglage par l'organe de réglage de soupape (14), et le courant de fluide qui traverse la soupape (10) pouvant ainsi être réglé.

2. Soupape (10) selon la revendication 1, **caractérisée en ce que** le corps de réglage (3) est agencé entre une ouverture d'entrée (4) et une ouverture de sortie (5) du boîtier (2), de telle sorte que le corps de réglage (3) coulisse relativement au siège de soupape (15) conformément à une différence de pression entre la pression d'un courant de fluide acheminé dans l'insert de compensation de pression (1) et la pression d'un courant de fluide acheminé en dehors de l'insert de compensation de pression (1) pour la coopération avec le siège de soupape (15).

3. Soupape (10) selon l'une quelconque des revendications 1 ou 2, **caractérisée en ce que** le boîtier (2) et le corps de réglage (3) sont configurés essentiellement sous forme cylindrique.

4. Soupape (10) selon l'une quelconque des revendications 1 à 3, **caractérisée en ce que** le boîtier (2) comprend plusieurs parties de boîtier, qui peuvent être reliées les unes avec les autres avec un ou plusieurs appareils de liaison.

5. Soupape (10) selon l'une quelconque des revendications 1 à 4, **caractérisée en ce qu'**un ou plusieurs appareils de limitation (29, 39) sont agencés, qui limitent le coulissement du corps de réglage (3) relativement au siège de soupape (15).

6. Soupape (10) selon l'une quelconque des revendications 1 à 5, **caractérisée en ce qu'**un élément d'étanchéité (133) est monté côté entrée entre le boîtier (2) et le corps de réglage (3).

7. Soupape (10) selon la revendication 1, **caractérisée en ce que** la membrane (6) pour le soutien du corps de réglage (3) comprend une ou plusieurs gaufrures de forme ondulée.

8. Soupape (10) selon l'une quelconque des revendications 1 à 7, **caractérisée en ce que** le boîtier (2) comprend une première section (21), qui est conçue pour l'étanchéification vis-à-vis d'un boîtier de la soupape (10), et **en ce que** le boîtier (2) comprend une troisième section (23), qui est conçue pour établir une liaison fluidique sous la forme d'une fente (S) entre le boîtier (2) et le boîtier de la soupape (10), la fente (S) fournissant une liaison fluidique jusqu'à la zone de fluide associée côté extérieur (P23, P21).

9. Soupape (10) selon l'une quelconque des revendications 1 à 8, **caractérisée en ce que** la zone de fluide associée côté extérieur (P23) est reliée fluidiquement avec le côté extérieur du boîtier (2) par l'intermédiaire d'une ou de plusieurs ouvertures (2d) dans une paroi du boîtier (2).

10. Soupape (10) selon l'une quelconque des revendications 1 à 9, **caractérisée en ce que**, côté entrée, une première section (21) du boîtier (2) comprend une rainure circonférentielle pour la réception d'un élément d'étanchéité (134), qui est conçu pour l'étanchéification vis-à-vis d'un boîtier de la soupape (10).

11. Soupape (10) selon l'une quelconque des revendications 1 à 10, **caractérisée en ce qu'**une rainure de forme annulaire pour la réception d'un insert d'étanchéité (132) pour l'élément de soupape (12) de la soupape (10) est montée, côté entrée, sur une troisième section (23) du boîtier (2).

12. Soupape (10) selon l'une quelconque des revendications 1 à 11, **caractérisée en ce qu'**une fente (S) est formée entre le boîtier (2) de l'insert de compensation de pression (1) et un boîtier de la soupape (10), laquelle fente (S) étant prévue pour l'établissement d'une liaison fluidique jusqu'à la zone de fluide associée côté extérieur (P23, P21) de l'insert de compensation de pression (1), et étant configurée de telle sorte que la pénétration de salissure dans l'insert de compensation de pression (1) soit réduite et/ou qu'un amortissement hydraulique du mouvement du corps de réglage (3) de l'insert de compensation de pression (1) soit effectué.

13. Soupape (10) selon l'une quelconque des revendications 1 à 12, **caractérisée en ce qu'**une deuxième partie de boîtier de soupape (9) est conçue pour la fixation de l'insert de compensation de pression (1) dans la première partie de boîtier de soupape (8), la première et la deuxième partie de boîtier de soupape (8, 9) étant conçues de telle sorte qu'une liaison active (11) puisse être établie entre la première et la deuxième partie de boîtier de soupape (8, 9).
